# FASCICULE DE BREVET EUROPEEN

(11) **EP 0 669 996 B1**
(45) Date de publication et mention de la délivrance du brevet: **21.08.1996**
(21) Numéro de dépôt: 94900864.3
(22) Date de dépôt: 22.11.1993
(51) Int. Cl.: D04H 18/00, H02P 7/74

(54) **AIGUILLETEUSE ET PROCEDE D'AIGUILLETAGE S'Y RAPPORTANT**
NADELMASCHINE UND VERNADELUNGSVERFAHREN
NEEDLING MACHINE AND NEEDLING METHOD RELATED THERETO

(30) Priorité: 23.11.1992 FR 9214038
(43) Date de publication de la demande: 06.09.1995
(73) Titulaire: ASSELIN, F-76504 Elbeuf Cédex (FR)
(72) Inventeur: JOURDE, Bernard, F-76500 Elbeuf (FR); JEAN, Robert Route de Louviers, F-27370 Amfreville-la-Campagne (FR); ROBIN, Jean-Claude, F-76320 Caudebec-les-Elbeuf (FR)
(74) Mandataire: Pontet, Bernard
(86) Numéro de dépôt international: FR9301147
(87) Numéro de publication internationale: WO9412715

(56) Documents cités:
- EP-A- 0 026 690
- WO-A-82/01283
- DE-A- 2 263 949
- FR-A- 2 218 416
- US-A- 2 864 040
- US-A- 4 476 424
- MELLIAND TEXTILBERICHTE vol. 52, no. 2 , 1 Février 1971 , HEIDELBERG DE pages 155 - 164 HANS-DETLEF HOEPP BERLIN 'messen und regeln in der nadelfilzindustrie'

## Description

La présente invention concerne une aiguilleteuse pour nappe textile, en particulier nappe non tissée, comprenant au moins deux ensembles d'aiguilletage.

La présente invention concerne également un procédé d'aiguilletage pouvant être mis en oeuvre avec cette aiguilleteuse.

On connaît d'après le EP-A-26690 une aiguilleteuse du genre indiqué au début, dans laquelle les deux ensembles d'aiguilletage sont commandés par un moteur relié aux différents ensembles d'aiguilletage par des transmissions mécaniques comprenant des arbres, des renvois d'angle et des courroies crantées.

On réalise ainsi une synchronisation entre les différents ensembles d'aiguilletage. Cette synchronisation permet de faire avancer la nappe de manière régulière pendant certaines phases de travail où toutes les aiguilles sont dégagées de la nappe.

On considère en général que les aiguilleteuses à deux ensembles d'aiguilletage, souvent appelées aiguilleteuses "double frappe", présentent des avantages d'équilibrage mécanique.

On connaît en particulier la double frappe simultanée superposée, dans laquelle deux ensembles d'aiguilletage situés dans un même axe vertical l'un en face du dessus de la nappe et l'autre en face du dessous de la nappe, sont actionnés pour pénétrer simultanément à travers la nappe.

On a alors l'avantage théorique que les inerties des deux ensembles d'aiguilletage se compensent d'une manière réduisant les vibrations.

On connaît également la double frappe alternée selon laquelle, avec la même disposition de base, les deux ensembles d'aiguilletage ont entre eux un déphasage de cycle de 180° de manière que l'un des ensembles d'aiguilletage soit complètement dégagé de la nappe lorsque l'autre ensemble d'aiguilletage est à l'état de pénétration maximale.

Cette configuration paraît encore plus avantageuse que la précédante car elle permet d'équilibrer les forces vibratoires de premier ordre avec un contrepoids excentré pour chaque ensemble d'aiguilletage, et elle équilibre par nature les forces vibratoires de second ordre, c'est à dire dont la fréquence est double de celle de la fréquence de cycle des ensembles d'aiguilletage.

En outre, les efforts de frappe sont mieux répartis sur un tour, et la force de pénétration de chaque ensemble est en partie produite par l'inertie de l'autre ensemble.

En réalité, le comportement vibratoire des aiguilleteuses connues à deux ensembles d'aiguilletage s'avère souvent décevant. Il a été trouvé selon l'invention que les transferts de force d'inertie dans la machine, notamment entre l'un et l'autre des deux ensembles d'aiguilletage, provoquent des résonances qui s'ajoutent aux résonances normales de chaque ensemble d'aiguilletage.

En outre, ces machines à deux ensembles d'aiguilletage sont difficiles ou impossibles à modifier ou à régler pour changer le calage angulaire entre les deux ensembles d'aiguilletage et pour modifier la densité de frappe sur l'une des faces de la nappe par rapport à l'autre. Ce rapport de densité ne peut être modifié qu'en utilisant des planches à aiguilles à nombre d'aiguilles plus ou moins grand par unité de surface. Ceci est compliqué à réaliser. En outre, la variation du nombre des aiguilles par unité de surface n'est en général réalisable que par suppression d'aiguilles à partir d'une situation de densité maximale, et on constate souvent en pratique que la suppression de nombreuses aiguilles dégrade l'aspect du produit aiguilleté obtenu, avec apparition de motifs non désirés.

Le but de l'invention est ainsi de proposer une aiguilleteuse et un procédé d'aiguilletage qui remédient à ces inconvénients, et qui en particulier permettent de régler aisément les conditions d'aiguilletage, notamment le déphasage, et le rapport de densité entre les deux ensembles d'aiguilletage, et qui améliorent considérablement le comportement vibratoire de l'aiguilleteuse.

Suivant un premier aspect de l'invention, l'aiguilleteuse comprenant des moyens de guidage pour une nappe textile, au moins deux ensembles d'aiguilletage comprenant chacun au moins une planche à aiguilles commandée par un mécanisme de mouvement alternatif, et des moyens moteurs pour entraîner lesdits mécanismes de manière conjuguée, est caractérisée en ce que les moyens moteurs comprennent un moteur respectif pour chaque ensemble d'aiguilletage, et en ce que l'aiguilleteuse comprend des moyens d'asservissement pour conjuguer les moteurs en position angulaire.

Selon un second aspect de l'invention , le procédé pour aiguilleter une nappe textile par au moins deux ensembles d'aiguilletage qui comprennent chacun au moins une planche à aiguilles et que l'on anime de mouvements de va et vient conjugués en position, est caractérisé en ce qu'on utilise un moteur respectif pour chaque ensemble d'aiguilletage, et en ce qu'on conjugue les moteurs en position angulaire par un asservissement.

Ainsi, grâce à l'invention, on n'a plus besoin de coupler mécaniquement l'un à l'autre les deux ensembles d'aiguilletage, et on évite ainsi les résonances dues aux transferts d'énergie entre les deux ensembles d'aiguilletage. On conserve cependant les qualités d'équilibrage propres à chaque configuration, et par conséquent le bilan vibratoire est entièrement positif.

De préférence, les moyens d'asservissement sont réglables pour modifier un angle d'écart de phase entre les deux moteurs. On peut ainsi régler l'angle d'écart de phase de façon à établir entre les deux ensembles d'aiguilletage un déphasage de cycle différent de 0° et de 180° d'angle et obtenir ainsi des nappes aiguilletées présentant des caractéristiques d'aiguilletage différentes de celles obtenues avec l'état de la technique. En outre, le réglage est particulièrement simple à effectuer, par exemple en entrant une consigne destinée aux moyens d'asservissement.

Les moyens d'asservissement peuvent également être adaptés à définir un rapport de vitesse entier différent de 1 entre les vitesses des deux moteurs.

On peut ainsi définir d'une manière nouvelle le rapport entre les densités de frappe produites par les deux ensembles d'aiguilletage, et obtenir un produit aiguilleté dont l'aspect ne soit pas détérioré par une modification des planches à aiguilles.

D'autres particularités et avantages de l'invention ressortiront encore de la description ci-après, relative à des exemples non limitatifs.

Aux dessins annexés :
- la figure 1 est une vue de face d'une aiguilleteuse selon l'invention ;
- la figure 2 est une vue de face de l'aiguilleteuse de la figure 1 à un autre stade de travail ;
- la figure 3 est une vue schématique en coupe longitudinale de l'aiguilleteuse des figures 1 et 2 ;
- la figure 4 est un schéma-bloc d'un premier mode de réalisation de l'asservissement reliant les deux moteurs ;
- les figures 5 et 6 sont des vues analogues à la figure 3 mais relatives à deux variantes de réalisation ; et
- la figure 7 est une vue analogue à la figure 4 mais relative à un autre mode de réalisation de l'asservissement, dans le cas d'une aiguilleteuse à trois ensembles d'aiguilletage.

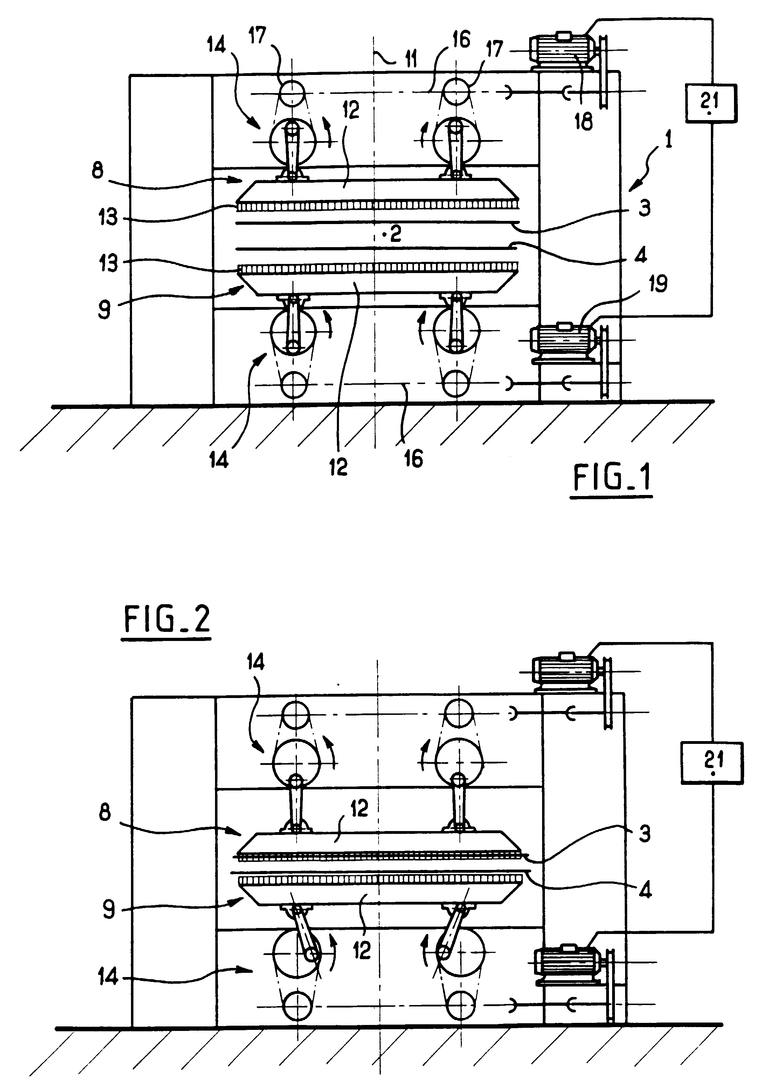

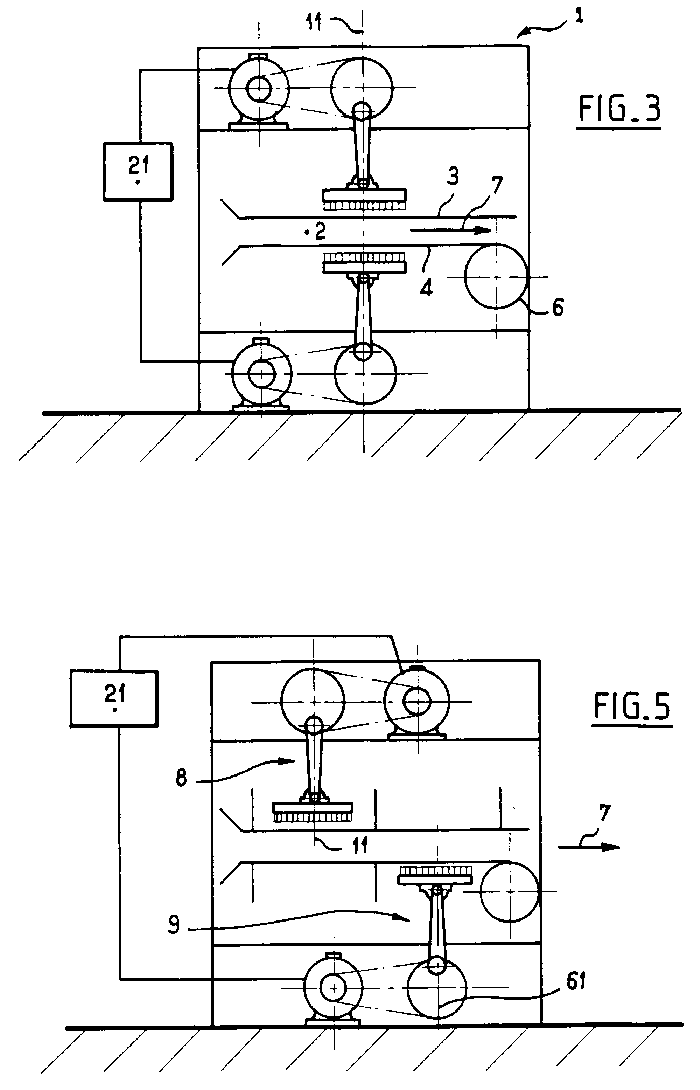

Dans l'exemple représenté à la figure 1, l'aiguilleteuse comprend un bâti 1 en forme de cadre. Des moyens de guidage constitués de deux tables 3, 4 définissent un trajet d'aiguilletage 2 traversant le bâti 1. Comme le montre la figure 3, l'aiguilleteuse comprend en outre un rouleau d'entraînement 6 qui en service est entraîné en rotation pour faire défiler une nappe non tissée (non représentée) entre les tables 3 et 4 selon une direction dite longitudinale, parallèle à la flèche 7.

L'aiguilleteuse comprend en outre deux ensembles d'aiguilletage, à savoir un ensemble d'aiguilletage supérieur 8 et à un ensemble d'aiguilletage inférieur 9 qui sont disposés selon un même axe vertical 11.

L'ensemble d'aiguilletage supérieur 8 et l'ensemble d'aiguilletage inférieur 9 sont disposés respectivement au-dessus et au-dessous du trajet d'aiguilletage 2. Ils comportent chacun une planche à aiguilles 12 dont les aiguilles 13 sont dirigées vers le trajet d'aiguilletage 2. Les aiguilles 13 peuvent traverser la table voisine 3 ou 4, convenablement perforée, comme le représente schématiquement la figure 2 pour l'ensemble d'aiguilletage supérieur 8.

Chaque planche à aiguilles 12 est reliée à un mécanisme de mouvement alternatif 14 comprenant dans l'exemple deux systèmes bielle-manivelle reliés à un arbre commun 16 par des dispositifs de renvoi d'angle 17 de manière que les deux systèmes bielle-manivelle tournent en sens contraires pour équilibrer certaines forces d'inertie.

Chaque arbre commun 16, entraînant le mécanisme de mouvement alternatif d'un ensemble d'aiguilletage respectif 8 ou 9, est relié à un moteur respectif 18 (ensemble d'aiguilletage supérieur 8) ou 19 (ensemble d'aiguilletage inférieur 9).

Les deux arbres commun 16 sont mécaniquement indépendants l'un de l'autre.

En outre, l'aiguilleteuse comprend des moyens d'asservissement 21 pour conjuguer les deux moteurs 18 et 19 en position angulaire.

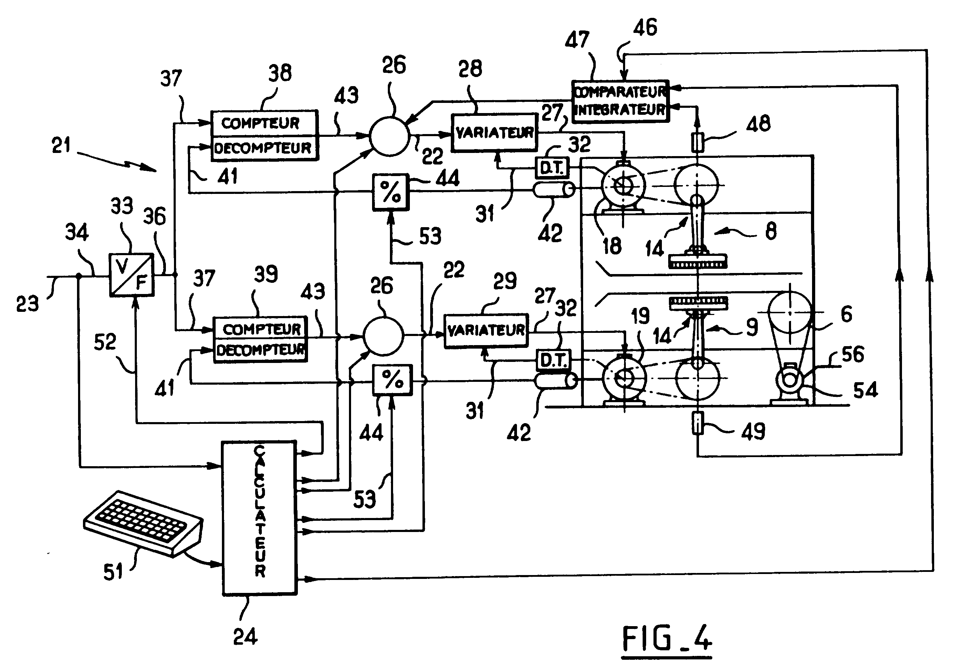

Dans l'exemple représenté à la figure 4, l'asservissement en position angulaire est constitué par un asservissement en vitesse avec correction de position.

Plus particulièrement, les moyens d'asservissement de vitesse comprennent, pour chaque moteur 18 et 19, un variateur de vitesse 28 et respectivement 29 recevant sur son entrée de commande 22 une consigne de vitesse issue d'une consigne de pilotage extérieure arrivant par une entrée 23 et distribuée par un calculateur 24, à travers un sommateur 26 dont la fonction sera décrite ultérieurement. Chaque variateur 28 et 29 envoie au moteur associé 18 et 19 une commande de puissance 27 et reçoit de la part du moteur associé 18 ou 19, par une ligne de retour 31, un signal de vitesse produit par un capteur de vitesse tel qu'une dynamo tachymétrique 32 associée à chacun des moteurs 18 et 19. A partir de la consigne présente sur son entrée 22 et du signal de retour présent sur la ligne de retour 31, le variateur 28 ou 29 module le signal de commande envoyé sur la ligne de puissance 27 pour que le moteur 18 ou 19 associé conserve une vitesse correspondant aussi bien que possible à la consigne produite par le calculateur 24.

Le signal présent sur l'entrée de consigne 23 est un signal issu d'un calculateur surveillant l'ensemble de la ligne de fabrication à laquelle appartient l'aiguilleteuse, ou encore un signal issu de la machine située juste en amont de l'aiguilleteuse, par exemple un étaleur-nappeur, un dérouleur ou une autre aiguilleteuse.

L'asservissement de vitesse qui vient d'être décrit pour les deux moteurs 18 ou 19 ne permet pas d'assurer aux moteurs 18 et 19 une concordance de position stable et prédéterminée.

C'est pourquoi le dispositif représenté à la figure 4 comprend en outre des moyens pour corriger les consignes de vitesse appliquées aux entrées 22 des variateurs 28 et 29 de manière à conjuguer les deux moteurs 18 et 19 en position angulaire.

Pour cela, les moyens d'asservissement 21 comprennent un convertisseur tension-fréquence 33 recevant le signal de consigne extérieure sur son entrée 34 et fournissant sur sa sortie 36 un signal dont la fréquence est représentative de cette consigne.

La fréquence produite sur la sortie 36 du convertisseur tension-fréquence est appliquée à l'entrée de comptage 37 de chacun de deux compteurs-décompteurs 38 et 39 associés aux moteurs 18 et 19 respectivement. L'entrée de décomptage 41 de chaque compteur-décompteur 38, 39 est reliée à un capteur de position angulaire 42 associé à chaque moteur 18 ou 19 respectif.

Les capteurs 42 sont du type incrémental c'est à dire produisent une impulsion chaque fois que l'arbre du moteur associé a effectué une rotation d'un angle prédéterminé, de sorte que la fréquence de ces impulsions est, en principe, exactement proportionnelle à la vitesse de rotation des moteurs dans un rapport bien déterminé.

Ainsi, le signal à la sortie 43 de chaque compteur-décompteur 38 ou 39 indique si le moteur associé 18 ou 19 a bien effectué la rotation totale correspondant au nombre d'impulsions reçues sur l'entrée de comptage 37, ou présente au contraire un retard ou une avance. Le signal sur la sortie 43 de chaque compteur-décompteur est appliqué à une entrée du sommateur 26 conduisant au variateur 28 ou 29 associé, de manière à modifier la consigne de vitesse produite par le calculateur 24 dans le sens de l'augmentation si le moteur 18 ou 19 présente un retard de position angulaire, et de la diminution s'il présente une avance de position angulaire.

L'asservissement de position par comptage-décomptage a l'avantage d'une grande précision à court terme pour un coût raisonnable.

En ce qui concerne la précision à long terme, il peut arriver que des parasites perturbent le comptage des impulsions, par exemple qu'une ou plusieurs impulsions ne puissent pas être comptées ou décomptées. Pour remédier à cette difficulté, les moyens d'asservissement 21 de la figure 4 comprennent en outre des capteurs de position angulaire prédéfinie 48 et 49 coopérant avec les mécanismes de mouvement alternatif 14 pour, une fois par tour de ces mécanismes, détecter tout décalage angulaire entre eux. Cette détection de décalage s'effectue dans un comparateur intégrateur 47 et le résultat de cette comparaison est appliqué à une troisième entrée de l'un des sommateurs 26 pour effectuer une correction supplémentaire sur la consigne appliquée au variateur correspondant (le variateur 29 dans l'exemple).

Pour éviter que les corrections effectuées à partir du comparateur 47 n'interagissent défavorablement avec celles produites par une sortie 43 des compteurs-décompteurs 38 et 39, le comparateur 47 est d'un type intégrant les erreurs relevées pendant une durée prédéterminée et n'effectuant des corrections qu'à l'issue de cette durée si l'erreur intégrée excède un certain seuil.

Le comparateur 47 comprend une entrée de commande 46 par laquelle le calculateur 24 lui applique une consigne de déphasage angulaire entre les deux moteurs 18 et 19 et par conséquent entre les deux mécanismes de mouvement alternatif 14.

Le calculateur 24 est relié à un clavier 51 par lequel un opérateur peut commander le calculateur pour régler le déphasage souhaité entre les deux ensembles d'aiguilletage 8 et 9.

Par le clavier 51, l'opérateur peut également imposer un rapport de vitesse entre les deux moteurs 18 et 19, ce rapport étant choisi parmi les nombres entiers, de manière que par exemple l'ensemble d'aiguilletage supérieur 8 effectue deux cycles d'aiguilletage pendant que l'ensemble d'aiguilletage inférieur n'en effectue qu'un. Pour tenir compte de cette possibilité, le signal des capteurs 42 est envoyé aux entrées de décomptage 41 des compteurs-décompteurs 38 et 39 par l'intermédiaire d'un diviseur de fréquence 44 qui est commandé par le calculateur 24 pour diviser par deux, dans l'exemple précédent, la fréquence d'impulsion appliquée à l'entrée de décomptage 41 de l'ensemble d'aiguilletage 8 le plus rapide, de manière que ce soit la moitié de la fréquence produite par son capteur 42 qui soit comparée à la fréquence 36 produite par le convertisseur tension-fréquence 33. Pour cela, les diviseurs tension-fréquence ont une entrée de commande 53 reliée au calculateur 24.

De manière non représentée, si un réglage a été effectué pour que les deux ensembles d'aiguilletage 8, 9 fonctionnent dans un rapport de vitesse différent de 1, une ligne aboutissant à une autre entrée du comparateur 47 informe ce dernier du rapport de vitesse à respecter entre les deux ensembles d'aiguilletage 8 et 9.

Le clavier 51 permet également de régler la vitesse générale de la machine par rapport à la consigne appliquée à l'entrée de consigne 23. En d'autres termes, si la consigne 23 est représentative de la vitesse à laquelle la nappe à aiguilleter pénètre dans l'aiguilleteuse, on peut souhaiter pour une même vitesse d'entrée des cadences de frappe plus ou moins rapides selon le produit qui entre et le produit aiguilleté que l'on désire réaliser. Le calculateur 24 produit sur les entrées 22 des variateurs 28 et 29 des tensions de consigne correspondant aux vitesses absolues voulues pour les moteurs 18 et 19 respectivement. En outre, le calculateur 24 applique à une entrée de commande 52 du convertisseur tension fréquence un signal qui commande le rapport tension fréquence produit par le convertisseur 33 compte-tenu du rapport que l'on souhaite entre la consigne extérieure et la vitesse générale de la machine.

Comme le montre encore la figure 4, le rouleau d'entraînement 6 est entraîné par un servo-moteur spécifique 54 qui reçoit une consigne de vitesse sur une entrée 56. On peut utiliser comme consigne de vitesse pour le calculateur 24 et l'entrée 34 du convertisseur tension-fréquence, à la place du signal fourni par une entrée 23 venant de l'extérieur, le signal de consigne de vitesse appliqué à l'entrée 56 du servomoteur 54. Comme on connaît en général de manière précise la relation entre la consigne appliquée au servomoteur 54 et la vitesse de rotation effective de ce servomoteur, le calculateur est ainsi informé de la vitesse effective de défilement de la nappe non tissée dans l'aiguilleteuse et peut par conséquent régler les cadences de frappe des deux ensembles d'aiguilletage 8 et 9 de manière à réaliser une densité d'aiguilletage bien déterminée sur chaque face du produit aiguilleté.

A la figure 1, on a représenté les deux planches à aiguilles 13 dans leur position de dégagement. A partir de cette position, si le rapport de vitesse entre les deux ensembles d'aiguilletage 8 et 9 est égal à 1, les deux planches à aiguilles 13 seront toutes deux en position de pénétration maximale après une rotation de 180° de chaque ensemble bielle-manivelle 14: le fonctionnement est alors du type frappe simultanée.

Si au contraire, la cadence de frappe de l'ensemble d'aiguilletage inférieur 9 est deux fois plus faible que celle de l'ensemble d'aiguilletage supérieur 8, on aura après un demi-tour de rotation du mécanisme supérieur 14 et par conséquent un quart de tour du mécanisme inférieur 14, la situation représentée à la figure 2, où la planche à aiguilles 12 supérieure est en position de pénétration maximale alors que la planche à aiguilles 12 inférieure est en position intermédiaire.

Mais la situation représentée à la figure 2 peut également correspondre au cas où, par exemple, la vitesse de rotation des deux ensembles d'aiguilletage 8 et 9 est la même avec un déphasage angulaire de 90° entre les ensembles d'aiguilletage 8 et 9.

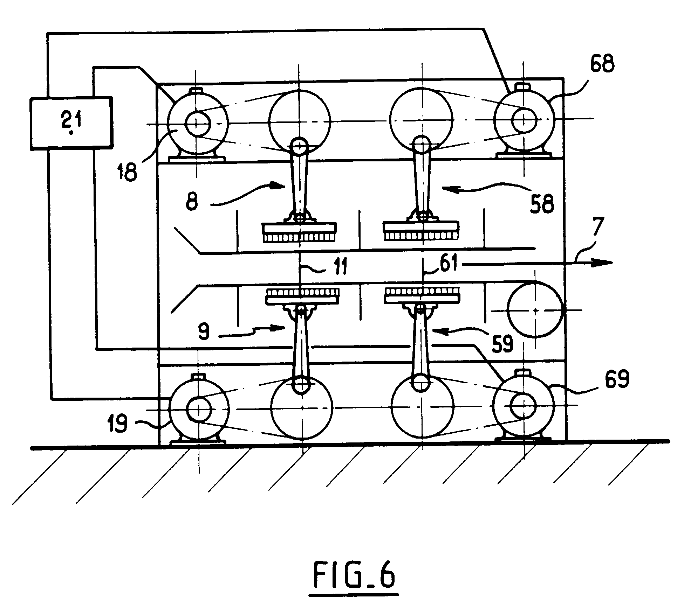

La figure 5 représente une variante de réalisation de l'aiguilleteuse. Les deux ensembles d'aiguilletage 8 et 9, au lieu d'être disposés sur un même axe vertical 11, sont disposés selon deux axes verticaux 11 et 61 décalés l'un par rapport à l'autre selon la direction 7 de déplacement de la nappe textile à travers l'aiguilleteuse.

Il est encore à noter qu'aux figures 3 et 5, on a représenté les mécanismes de mouvement alternatif sous la forme d'un embiellage dont les axes d'articulation sont parallèles à la direction transversale de la machine, alors qu'aux figures 1 et 2, on retrouve des embiellages mais dont les axes d'articulation sont orientés selon la direction longitudinale de la machine, c'est à dire la direction de déplacement de la nappe textile à travers la machine. Ces deux agencements sont réalisables au choix.

La figure 6 représente encore un autre exemple de configuration, avec quatre ensembles d'aiguilletage, à savoir deux ensembles d'aiguilletage supérieur 8, 58 et deux ensembles d'aiguilletage inférieur 9, 59, et chaque ensemble d'aiguilletage est associé à un moteur d'entraînement respectif 18, 19, 68, 69 indépendant des trois autres ensembles d'aiguilletage. Les ensembles d'aiguilletage 8 et 9 sont disposés sur un même axe vertical 11 et les ensembles d'aiguilletage 58 et 59 sont disposés sur un même axe vertical 61 décalé par rapport à l'axe 11 selon la direction 7 de déplacement de la nappe textile à travers l'aiguilleteuse.

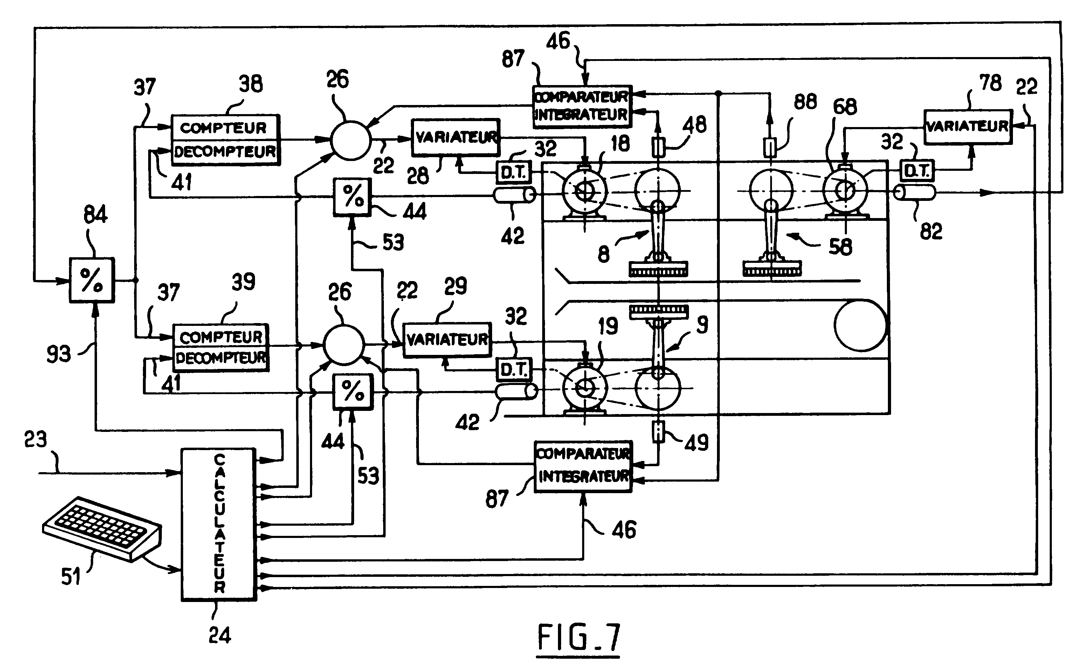

L'exemple représenté à la figure 7, qui ne sera décrit que pour ses différences par rapport à celui de la figure 4, concerne un autre mode d'asservissement de position angulaire entre les ensembles d'aiguilletage dans une aiguilleteuse comprenant trois ensembles d'aiguilletage 8, 9, 58 entraînés indépendamment les uns des autres par trois moteurs 18, 19, 68 respectivement.

Les trois moteurs 18, 19, 68 sont asservis à une consigne de vitesse issue du calculateur 24 relié à une entrée de consigne 23. Pour cela, chaque moteur 18, 19, 68 coopère avec un variateur 28, 29, 78 comme il a été dit pour les variateurs 28 et 29 de la figure 4. Le signal appliqué à l'entrée 22 de chacun des variateurs électroniques 28 et 29 est issu, comme à la figure 4, d'un sommateur 26 capable de corriger la consigne de vitesse pour compenser les écarts de position détectés au moyen d'un compteur-décompteur 38, 39 dont l'entrée de décomptage 41 reçoit par l'intermédiaire d'un diviseur de fréquence 44 un signal issu d'un capteur incrémental 42 relié au moteur 18 ou 19 associé.

Par contre, l'ensemble d'aiguilletage 68 n'est pas soumis à une compensation de position angulaire. Au contraire, c'est à partir de l'ensemble d'aiguilletage 68 que va être produite la fréquence appliquée aux entrées de comptage 37 des compteurs-décompteurs 38 et 39. Pour cela, le moteur 68 de l'ensemble d'aiguilletage 58 est associé à un capteur incrémental 82 analogue aux capteurs 42 des ensembles 8 et 9 et le signal produit par le capteur incrémental 82 est appliqué aux entrées de comptage 37 par l'intermédiaire d'un diviseur de fréquence 84 dont une entrée de commande 93 est reliée au calculateur 24 par exemple pour diviser par deux la fréquence appliquée aux entrées 37 par rapport à celle produite par le capteur incrémental 82 lorsque l'on souhaite que la cadence des ensembles 8 et 9 soit deux fois plus faible que celle de l'ensemble 58.

En outre, les signaux des capteurs de position angulaire prédéfinie 48 et 49 des ensembles 8 et 9, au lieu d'être comparés entre eux dans un seul comparateur 47, sont chacun comparés dans un comparateur intégrateur 87 respectif avec le signal produit par un capteur de position angulaire prédéfinie 88 de l'ensemble 58. Chaque comparateur 87 a une entrée 46 permettant au calculateur 24 de lui appliquer une consigne de déphasage par rapport à l'ensemble d'aiguilletage 58. Le signal de sortie de chaque comparateur 87 est appliqué au sommateur 26 associé à l'ensemble d'aiguilletage 8 ou 9 correspondant.

En résumé, dans l'exemple de la figure 7, le moteur 68 est un moteur-maître et les moteurs 18 et 19 des moteurs-esclaves. Le variateur 78 associé au moteur 68, reçoit sur son entrée de consigne 22 un signal provenant directement du calculateur 24.

Le mode d'asservissement de la figure 4 est préféré à celui de la figure 7 car dans le mode d'asservissement de la figure 4, qui peut être appliqué à des configurations à plus de deux ensembles d'aiguilletage, chaque ensemble d'aiguilletage suit indépendamment des autres une consigne extérieure. En cas de perturbation sur un ensemble d'aiguilletage, les autres ensembles peuvent continuer imperturbablement le cycle. Au contraire, dans l'exemple de la figure 7, une perturbation sur l'ensemble d'aiguilletage maître 58 risque de perturber les ensembles esclaves 8 et 9.

Dans tous les exemples les transferts d'énergie mécanique entre deux ensembles d'aiguilletage sont supprimés, de même que les résonances et autres perturbations de cycle qui peuvent en résulter. En outre, on peut très commodément régler à l'aide du clavier 51 les rapports de vitesse et/ou les déphasages entre les différents ensembles d'aiguilletage. On évite toutefois les rapports de vitesse non-entiers car ils provoquent des irrégularités dans l'avancement du produit à travers l'aiguilleteuse et finalement dans la densité d'aiguilletage du produit obtenu.

Bien entendu, l'invention n'est pas limitée aux exemples décrits et représentés.

Pour réaliser l'asservissement de position, on pourrait, en référence à la figure 4, supprimer les capteurs de position angulaire prédéfinie 48 et 49 ainsi que le comparateur 47. Dans ce cas, il est nécessaire de donner manuellement aux deux ensembles d'aiguilletage le déphasage voulu entre eux avant la mise en marche de l'aiguilleteuse. Ensuite, après démarrage des moteurs, les capteurs incrémentaux 42 et les compteurs-décompteurs 38 et 39 maintiennent strictement le rapport de vitesse voulu et par conséquent le déphasage initial est également conservé. Les erreurs de comptage-décomptage pouvant produire à la longue une certaine erreur sur le déphasage peuvent être corrigées de temps en temps en arrêtant brièvement la machine et en recalant manuellement les ensembles d'aiguilletage l'un par rapport à l'autre.

On pourrait encore remplacer les capteurs incrémentaux 42 et les capteurs de position angulaire préfinie 48 et 49 par des capteurs de position angulaire absolue associés aux arbres des moteurs 18 et 19, mais cette solution peut être plus coûteuse.

On pourrait intégrer le ou les comparateurs 47, 87 dans le calculateur 24.

Plutôt que d'utiliser un diviseur de fréquence 44 ou 84 à la sortie de chaque capteur 42 ou 82 pour pouvoir réduire n'importe laquelle des vitesses d'ensemble d'aiguilletage par rapport aux vitesses des autres ensembles d'aiguilletage, on pourrait utiliser des dispositifs pouvant fonctionner aussi bien en multiplicateur qu'en diviseur. Ceci permettrait de ne prévoir qu'un multiplicateur-diviseur au lieu de deux diviseurs à la figure 4, et deux multiplicateurs-diviseurs au lieu de trois diviseurs à la figure 7. En effet, si le dispositif tel que 44 est capable non seulement de diviser mais aussi de multiplier, on peut, par exemple dans le cas de la figure 4 à deux ensembles d'aiguilletage, multiplier la fréquence associée à l'un des ensembles d'aiguilletage plutôt que de diviser celle produite par l'autre ensemble d'aiguilletage.

Dans le dispositif de la figure 7, on pourrait ajouter des moyens de commutation permettant de sélectionner celui des trois moteurs 18, 19 et 69 qui doit avoir la fonction de maître et ceux qui doivent fonctionner en esclave. Il est a priori avantageux de donner la fonction de maître au moteur de l'ensemble d'aiguilletage qui fonctionne à la cadence la plus élevée. Ainsi, on effectue les réglages résultant de l'asservissement de position sur les ensembles plus lents, dans lesquels les forces d'inertie sont donc plus faibles.

## Revendications

1. Aiguilleteuse comprenant des moyens de guidage (3, 4) pour une nappe textile, au moins deux ensembles d'aiguilletage (8, 9) comprenant chacun au moins une planche (12) à aiguilles (13) commandée par un mécanisme de mouvement alternatif (14), et des moyens moteurs (18, 19, 68, 69) pour entraîner lesdits mécanismes de manière conjuguée, caractérisée en ce que les moyens moteurs comprennent un moteur respectif (18 ou 19) pour chaque ensemble d'aiguilletage (8, 9), et en ce que l'aiguilleteuse comprend des moyens d'asservissement pour conjuguer les moteurs (18, 19) en position angulaire.

2. Aiguilleteuse selon la revendication 1, caractérisée en ce que les moyens d'asservissement (21) sont réglables pour modifier un angle d'écart de phase entre les moteurs (18, 19, 68, 69).

3. Aiguilleteuse selon la revendication 1 ou 2, caractérisée en ce que les moyens d'asservissement (21) sont adaptés à définir un rapport de vitesses entier différent de 1 entre les vitesses des moteurs (18, 19, 68, 69).

4. Aiguilleteuse selon l'une des revendications 1 à 3, caractérisée en ce que les moyens d'asservissement (21) comprennent des moyens d'asservissement de vitesse (29, 32, 78) pour conjuguer les moteurs (18, 19, 78) en vitesse angulaire, des moyens (38, 39, 42, 48, 49, 88) pour détecter les écarts de position de l'un au moins des moteurs (18, 19), et des moyens (26) pour corriger les écarts de position.

5. Aiguilleteuse selon la revendication 4, caractérisée en ce que les moyens d'asservissement comprennent des moyens (38, 39, 47, 87) pour modifier une consigne de vitesse (22) des moyens d'asservissement de vitesse en fonction d'écarts de position détectés.

6. Aiguilleteuse selon la revendication 4 ou 5, caractérisée en ce que les moyens pour détecter les écarts de position comprennent au moins un compteur-décompteur (38, 39).

7. Aiguilleteuse selon la revendication 6, caractérisée en ce que les moyens pour détecter les écarts de position comprennent pour chaque moteur dont les écarts de position sont détectés un compteur-décompteur dont l'une des entrées est reliée à un capteur (42) de mouvement du moteur associé (18, 19) et l'autre entrée est reliée à une source de fréquence de référence (33, 82).

8. Aiguilleteuse selon l'une des revendications 6 ou 7, caractérisée par des moyens (47, 48, 49) pour en outre détecter et corriger les écarts de position durables.

9. Aiguilleteuse selon la revendication 8, caractérisée en ce que les moyens pour détecter et corriger les écarts de position durable comprennent un comparateur intégrateur (47) fournissant un signal de correction lorsque l'intégrale des écarts relevés pendant une durée prédéterminée dépasse un seuil prédéterminé.

10. Aiguilleteuse selon l'une des revendications 1 à 9, caractérisée en ce que pour conjuguer les moteurs en position angulaire, les moyens d'asservissement conjuguent chaque moteur (18, 19) avec un signal de référence de position (36).

11. Aiguilleteuse selon la revendication 9, caractérisée par des moyens (33, 24) pour élaborer à partir d'un signal de référence (23, 56) un signal de référence de vitesse pour l'asservissement de vitesse et le signal de référence de position (36).

12. Aiguilleteuse selon l'une des revendications 4 à 9, caractérisée par des moyens (24) pour élaborer la consigne de vitesse à partir d'un signal du référence de vitesse (23, 56) et des moyens (82) pour élaborer la consigne de position à partir de la position angulaire de l'un des moteurs (58) fonctionnant en moteur-maître par rapport à au moins un autre des moteurs (18, 19).

13. Aiguilleteuse selon la revendication 12, caractérisée en ce que le moteur-maître (68) est asservi à la consigne de vitesse.

14. Aiguilleteuse selon l'une des revendications 1 à 9, caractérisée en ce que les moyens d'asservissement (21) comprennent des moyens pour asservir la position angulaire de l'un des moteurs (18, 19) à celle de l'autre moteur (68), utilisée comme position de référence.

15. Aiguilleteuse selon l'une des revendications 1 à 9, caractérisée en ce qu'elle comprend au moins un troisième ensemble d'aiguilletage (58) avec une planche à aiguilles commandée par un mécanisme de mouvement alternatif relié à un troisième moteur respectif (68), et en ce que les moyens d'asservissement (21) comprennent des moyens pour asservir à la position angulaire de l'un (68) des moteurs, utilisée comme position de référence, la position angulaire des deux autres moteurs (18, 19).

16. Aiguilleteuse selon l'une des revendications 12 ou 15, caractérisée en ce que les moyens d'asservissement (21) comprennent des moyens pour sélectionner le moteur dont la position angulaire est utilisée comme position de référence.

17. Aiguilleteuse selon l'une des revendications 1 à 16, caractérisée en ce que les moyens d'asservissement (21) comprennent des moyens (24) pour élaborer une consigne d'asservissement des moteurs d'après un paramètre de fonctionnement d'un organe rotatif (6, 54) de l'aiguilleteuse actionné indépendamment des moteurs (18, 19).

18. Aiguilleteuse selon l'une des revendications 1 à 16, caractérisée en ce que les moyens d'asservissement (21) comprennent des moyens (24) pour élaborer une consigne d'asservissement des moteurs d'après une référence extérieure (23).

19. Procédé pour aiguilleter une nappe textile par au moins deux ensembles d'aiguilletage (8, 9, 58, 59) comprenant chacun au moins une planche (12) à aiguilles (13) et que l'on anime de mouvements de va et vient conjugués en position, caractérisé en ce que l'on utilise un moteur respectif (18, 19, 68, 69) pour chaque ensemble d'aiguilletage, et en ce qu'on conjugue les moteurs (18, 19, 68, 69) en position angulaire par un asservissement (21).

20. Procédé selon la revendication 19, caractérisée en ce qu'on conjugue les moteurs (18, 19) de façon à établir entre les deux ensembles d'aiguilletage un déphasage de cycle différent de 0° et de 180° d'angle.

21. Procédé selon la revendication 19 ou 20, caractérisé en ce qu'on conjugue les moteurs (18, 19) de façon que leurs vitesses soient dans un rapport entier différent de 1.

## Patentansprüche

1. Nadelfilzmaschine, umfassend Führungsmittel (3, 4) für ein Textilvlies, wobei zumindest zwei Nadelungseinheiten (8, 9), die jeweils zumindest ein Bett (12) mit Nadeln (13) umfassen, das durch einen Vor- und Rückgangsmechanismus (14) gesteuert wird, sowie Antriebsmittel (18, 19, 68, 69) zum Antreiben der Mechanismen in einer aufeinander abgestimmten Weise, dadurch gekennzeichnet, daß die Antriebsmittel jeweils einen Motor (18 bzw. 19) für jede Nadelungseinheit (8, 9) umfassen und daß die Nadelfilzmaschine Regelungsmittel zum aufeinander Abstimmen der Motoren (18, 19) bezüglich ihrer Winkelposition umfassen.

2. Nadelfilzmaschine nach Anspruch 1, dadurch gekennzeichnet, daß die Regelungsmittel (21) zur Veränderung eines Phasenabweichungswinkels zwischen den Motoren (18, 19, 68, 69)einstellbar sind.

3. Nadelfilzmaschine nach Anspruch 1 oder 2, dadurch gekennzeichnet, daß die Regelungsmittel (21) dazu ausgebildet sind, ein ganzzahliges Geschwindigkeitsverhältnis zwischen den Geschwindigkeiten der Motoren (18, 19, 68, 69) zu definieren, das ungleich 1 ist.

4. Nadelfilzmaschine nach einem der Ansprüche 1 bis 3, dadurch gekennzeichnet, daß die Regelungsmittel (21) Geschwindigkeitsregelungsmittel (29, 32, 78) zum aufeinander Abstimmen der Motoren (18,19,78) bezüglich ihrer Winkelgeschwindigkeit umfassen sowie Mittel (38, 39, 42, 48, 49, 88) zum Erfassen der Positionsabweichungen zumindest eines der Motoren (18, 19) und Mittel (26) zum Korrigieren der Positionsabweichungen.

5. Nadelfilzmaschine nach Anspruch 4, dadurch gekennzeichnet, daß die Regelungsmittel Mittel (38, 39, 47, 87) zum Ändern eines Geschwindigkeitseinstellwertes (22) der Geschwindigkeitsregelungsmittel abhängig von den erfaßten Positionsabweichungen umfassen.

6. Nadelfilzmaschine nach Anspruch 4 oder 5, dadurch gekennzeichnet, daß die Mittel zum Erfassen der Positionsabweichungen zumindest einen Vorwärts-Rückwärts-Zähler (38, 39) umfassen.

7. Nadelfilzmaschine nach Anspruch 6, dadurch gekennzeichnet, daß die Mittel zum Erfassen der Positionsabweichungen für jeden Motor, dessen Positionsabweichungen erfaßt werden, einen Vorwärts-Rückwärts-Zähler umfassen, von welchem einer der Eingänge mit einem Bewegungssensor (42) des zugehörigen Motors (18, 19) verbunden ist, und der andere Eingang mit einer Bezugsfrequenzquelle (33, 82) verbunden ist.

8. Nadelfilzmaschine nach einem der Ansprüche 6 oder 7, gekennzeichnet durch Mittel (47, 48, 49) zum zusätzlichen Erfassen und Korrigieren der beständigen Positionsabweichungen.

9. Nadelfilzmaschine nach Anspruch 8, dadurch gekennzeichnet, daß die Mittel zum Erfassen und Korrigieren der beständigen Positionsabweichungen einen integrierenden Komparator (47) umfassen, der ein Korrektursignal liefert, wenn das Integral der Abweichungen, die in einer vorbestimmten Periode beobachtet werden, einen vorbestimmten Schwellenwert überschreitet.

10. Nadelfilzmaschine nach einem der Ansprüche 1 bis 9, dadurch gekennzeichnet, daß zum aufeinander Abstimmen der Motoren bezüglich ihrer Winkelposition die Regelungsmittel jeden Motor (18,19) mit einem Positionsreferenzsignal (36) koppeln.

11. Nadelfilzmaschine nach Anspruch 9, gekennzeichnet durch Mittel (33, 24) zum Erstellen eines Geschwindigeitsreferenzsignals zur Geschwindigkeitsregelung und des Positionsreferenzsignals (36) aus einem Referenzsignal (23, 56).

12. Nadelfilzmaschine nach einem der Ansprüche 4 bis 9, gekennzeichnet durch Mittel (24) zum Erstellen des Geschwindigkeitseinstellwertes aus einem Geschwindigkeitsreferenzsignal (23, 56) und durch Mittel (82) zum Erstellen des Positionseinstellwertes aus der Winkelposition eines der Motoren (68), der in bezug auf zumindest einen anderen der Motoren (18, 19) als Hauptmotor arbeitet.

13. Nadelfilzmaschine nach Anspruch 12, dadurch gekennzeichnet, daß der Hauptmotor (68) von dem Geschwindigkeitseinstellwert abhängig ist.

14. Nadelfilzmaschine nach einem der Ansprüche 1 bis 9, dadurch gekennzeichnet, daß die Regelungsmittel (21) Mittel zum Einstellen der Winkelposition eines der Motoren (18, 19) auf jene des anderen Motors (68), die als Referenzposition verwendet wird, umfassen.

15. Nadelfilzmaschine nach einem der Ansprüche 1 bis 9, dadurch gekennzeichnet, daß sie zumindest eine dritte Nadelungseinheit (58) mit einem Nadelbett umfaßt, die von einem Vor- und Rückgangsmechanismus gesteuert wird, der mit einem entsprechenden dritten Motor (68) verbunden ist, und daß die Regelungsmittel (21) Mittel zum Einstellen auf die Winkelposition des einen (68) der Motoren, die als Referenzposition verwendet wird, der Winkelposition der beiden anderen Motoren (18, 19) umfaßt.

16. Nadelfilzmaschine nach einem der Ansprüche 12 oder 15, dadurch gekennzeichnet, daß die Regelungsmittel (21) Mittel zum Auswählen des Motors umfassen, dessen Winkelposition als Referenzposition verwendet wird.

17. Nadelfilzmaschine nach einem der Ansprüche 1 bis 16, dadurch gekennzeichnet, daß die Regelungsmittel (21) Mittel (24) zum Erstellen eines Regelungseinstellwertes der Motoren nach einem Betriebsparameter eines Drehorgans (6, 54) der Nadelfilzmaschine, das unabhängig von den Motoren (18, 19) betätigt wird, umfassen.

18. Nadelfilzmaschine nach einem der Ansprüche 1 bis 16, dadurch gekennzeichnet, daß die Regelungsmittel (21) Mittel (24) zum Erstellen eines Regelungseinstellwertes der Motoren nach einem äußeren Referenzwert (23) umfassen.

19. Verfahren zum Nadeln eines Textilvlieses durch mindestens zwei Nadelungseinheiten (8, 9, 58, 59), die jeweils mindestens ein Bett (12) mit Nadeln (13) umfassen und die bezüglich ihrer Position aufeinander abgestimmt hin- und herbewegt werden, dadurch gekennzeichnet, daß jeweils ein Motor (18, 19, 68, 69) für jede Nadelungseinheit verwendet wird, und daß die Motoren (18,19,68,69) bezüglich ihrer Winkelposition durch ein Regelungssystem (21) aufeinander abgestimmt sind.

20. Verfahren nach Anspruch 19, dadurch gekennzeichnet, daß die Motoren (18, 19) derart aufeinander abgestimmt sind, daß zwischen den beiden Nadelungseinheiten eine Zyklusphasenverschiebung ungleich einem Winkel von 0° und 180° entsteht.

21. Verfahren nach Anspruch 19 oder 20, dadurch gekennzeichnet, daß die Motoren (18, 19) derart aufeinander abgestimmt sind, daß ihre Geschwindigkeiten in einem ganzzahligen Verhältnis liegen, das ungleich 1 ist.

## Claims

1. Needling machine comprising guidance means (3, 4) for a textile cloth, at least two needling assemblies (8, 9) each comprising at least one needle (13) board (12) driven by an alternating motion mechanism (14), and motor means (18, 19, 68, 69) for driving the said mechanisms in a conjugated manner, characterized in that the motor means comprise a respective motor (18 or 19) for each needling assembly (8, 9), and in that the needling machine comprises servo-control means to conjugate the motors (18, 19) in angular position.

2. Needling machine according to Claim 1, characterized in that the servo-control means (21) are adjustable in order to modify the phase difference angle between the motors (18, 19, 68, 69).

3. Needling machine according to Claim 1 or 2, characterized in that the servo-control means (21) are adapted to define an integer speed ratio different from 1 between the speeds of the motors (18, 19, 68, 69).

4. Needling machine according to one of Claims 1 to 3, characterized in that the servo-control means (21) comprise speed servo-control means (29, 32, 78) to conjugate the motors (18, 19, 78) in angular position, means (38, 39, 42, 48, 49, 88) to detect the positional deviations of at least one of the motors (18, 19), and means (26) for correcting the positional deviations.

5. Needling machine according to Claim 4, characterized in that the servo-control means comprise means (38, 39, 47, 87) for modifying a speed command (22) of the speed servo-control means as a function of detected positional deviations.

6. Needling machine according to Claim 4 or 5, characterized in that the means of detecting the positional deviations comprise at least one up/down counter (38, 39).

7. Needling machine according to Claim 6, characterized in that the means of detecting the positional deviations comprise, for each motor whose positional deviations are detected, an up/down counter one of whose inputs is connected to a motion sensor (42) of the associated motor (18, 19) and whose other input is connected to a reference frequency source (33, 82).

8. Needling machine according to one of Claims 6 or 7, characterized by means (47, 48, 49) for furthermore detecting and correcting durable positional deviations.

9. Needling machine according to Claim 8, characterized in that the means of detecting and correcting the durable positional deviations comprise an integrating comparator (47) supplying a correction signal when the integral of the deviations recorded over a predetermined period exceeds a predetermined threshold.

10. Needling machine according to one of Claims 1 to 9, characterized in that in order to conjugate the motors in angular position, the servo-control means conjugate each motor (18, 19) with a positional reference signal (36).

11. Needling machine according to Claim 9, characterized by means (33, 24) for generating from a reference signal (23, 56) a speed reference signal for the speed servo-control and the positional reference signal (36).

12. Needling machine according to one of Claims 4 to 9, characterized by means (24) for generating the speed command from a speed reference signal (23, 56) and means (82) for generating the position command from the angular position of one of the motors (58) functioning as a master motor with respect to at least one other of the motors (18, 19).

13. Needling machine according to Claim 12, characterized in that the master motor (68) is slaved to the speed command.

14. Needling machine according to one of Claims 1 to 9, characterized in that the servo-control means (21) comprise means for slaving the angular position of one of the motors (18, 19) to that of the other motor (68), used as a positional reference.

15. Needling machine according to one of Claims 1 to 9, characterized in that it comprises at least a third needling assembly (58) with a needle board driven by an alternating motion mechanism connected to a third respective motor (68), and in that the servo-control means (21) comprise means for slaving to the angular position of one (68) of the motors, used as a reference position, the angular position of the other two motors (18, 19).

16. Needling machine according to one of Claims 12 or 15, characterized in that the servo-control means (21) comprise means of selecting the motor whose angular position is used as a reference position.

17. Needling machine according to one of Claims 1 to 16, characterized in that the servo-control means (21) comprise means (24) of generating a control command for the motors from a functional parameter of a rotary member (6, 54) of the needling machine actuated independently from the motors (18, 19).

18. Needling machine according to one of Claims 1 to 16, characterized in that the servo-control means (21) comprise means (24) for generating a control command for the motors from an external reference (23).

19. Method for needling a textile cloth using at least two needling assemblies (8, 9, 58, 59) each comprising at least one needle (13) board (12) and wherein the forward and backward motions are conjugated in position, characterized in that a respective motor (18, 19, 68, 69) is used for each needling assembly, and in that the motors (18, 19, 68, 69) are conjugated in angular position by a servo-mechanism (21).

20. Method according to Claim 19, characterized in that the motors (18, 19) are conjugated in such a way as to establish a cycle phase difference, different from 0° and 180° of angle, between the two needling assemblies.

21. Method according to Claim 19 or 20, characterized in that the motors (18, 19) are conjugated in such a way that their speeds are in an integer ratio different from 1.
